# EUROPEAN PATENT APPLICATION

(11) **EP 4 647 647 A1**
(43) Date of publication of application: **12.11.2025**
(21) Application number: 25175002.2
(22) Date of filing: 08.05.2025
(51) Int. Cl.: F21S 43/15, B60Q 1/54, F21S 43/14, F21S 43/20, F21S 43/27, F21S 43/00, F21S 45/10, B60Q 1/26

(54) **THROUGH LAMP ASSEMBLY FOR WARNING VEHICLE**

(30) Priority: 11.04.2025 CN 202510450225
(71) Applicant: Y.LIN ELECTRONICS CO.,LTD., Dongguan City Guangdong Province (CN)
(72) Inventor: Qiu, Guoliang, Miaoli County (TW); Wu, Yonghan, Dongguan City (CN); Lin, Qicheng, Dongguan City (CN); Wu, Hongrui, Dongguan City (CN)
(74) Representative: Plavsa, Olga

(57) **Abstract**

Provided is a through lamp assembly for a warning vehicle, including: a connecting housing (2) and a lamp cover (1); an LED light strip (3) mounted inside an inner cavity of the connecting housing (2); a flip bracket (4) rotatably connected to the internal cavity of the connecting housing (2), where the connecting housing (2) is provided with a flipping mechanism configured to drive the flip bracket (4) to flip toward an inner side of the connecting housing (2); and a diffusion plate (5) mounted on the flip bracket (4), where when the diffusion plate (5) flips to a position parallel to a surface of the LED light strip (3), the diffusion plate (5) is located between the lamp cover (1) and the LED light strip (3). Uniform diffusion of light through the diffusion plate (5) is not required, thereby increasing light intensity of the LED light strip (3) and improving visibility during daytime; and at night, the diffusion plate (5) uniformly diffuses the light, thereby preventing glare.

## Description

### TECHNICAL FIELD

The present invention relates to the technical field of automotive lighting, and particularly relates to a through lamp assembly for a warning vehicle.

### BACKGROUND

New energy vehicles refer to automobiles with advanced technical principles, new technologies, and new structures that utilize unconventional vehicle fuels as power sources (or conventional vehicle fuels and new vehicle-mounted power units) and integrate advanced technologies in vehicle power control and drive systems. New energy vehicles include battery electric vehicles, extended-range electric vehicles, hybrid electric vehicles, fuel cell electric vehicles, hydrogen engine vehicles, and the like.

At present, some new energy warning vehicles are provided with through lamps, and each of the through lamps mainly includes a lamp cover, an LED light strip, a light guide strip (referred to as a diffusion plate in the present invention), a connecting housing, and the like. The light guide strip is configured to diffuse light emitted by the LED light strip, but prolonged exposure to light causes the light guide strip to undergo yellowing degradation. It is well known that under high-illumination conditions (e.g., daytime), the light emitted by the LED light strip needs to ensure a high intensity of illumination, but the light guide strip weakens the light emitted by the LED light strip. At night, the LED light strip must be combined with the light guide strip to diffuse the light and prevent glare. Therefore, those skilled in the art are in an urgent need to provide a through lamp assembly that enhances the illumination intensity of the LED light strip without need of the light guide strip during daytime and requires use of the light guide strip to diffuse the light at night.

### SUMMARY

An objective of the present invention is to provide a through lamp assembly for a warning vehicle, so as to solve the technical problems mentioned in the above Background.

To achieve the above objective, the present invention provides the following technical solution:

A through lamp assembly for a warning vehicle, includes:
a connecting housing and a lamp cover cooperatively mounted with the connecting housing;
an LED light strip mounted inside an inner cavity of the connecting housing;
a flip bracket rotatably connected to the internal cavity of the connecting housing, where the connecting housing is provided with a flipping mechanism configured to drive the flip bracket to flip toward an inner side of the connecting housing; and
a diffusion plate mounted on the flip bracket, where when the diffusion plate flips to a position parallel to a surface of the LED light strip, the diffusion plate is located between the lamp cover and the LED light strip.

Further, the flipping mechanism includes a sliding block inserted into an accommodating groove formed on a surface of the connecting housing, the sliding block freely slides in the accommodating groove, a rack portion is arranged on a surface of the sliding block, and a gear portion is arranged on a surface of the flip bracket, where the gear portion is coaxial with a rotating pivot of the flip bracket on the connecting housing, the gear portion and the rack portion are externally meshed with each other, and the connecting housing is provided with a linear translation assembly configured to drive the sliding block to linearly move inside the accommodating groove.

Further, the linear translation assembly includes a connecting pin fixedly connected to a surface of the sliding block, one end of the connecting pin away from the sliding block is fixedly connected to a magnetic conductive slider, a waist-shaped hole for the connecting pin to pass through freely is formed inside the connecting housing, a mounting cavity for the magnetic conductive slider to pass through freely is further arranged inside the connecting housing, an electromagnet is mounted at a bottom of the mounting cavity, the electromagnet and the magnetic conductive slider are cooperatively used, and an elastic member is arranged therebetween, where the elastic member is configured to exert an elastic abutment-resisting force on the magnetic conductive slider in a direction away from the electromagnet.

Further, the elastic member is a spring, and two elastic ends of the spring abut against both the electromagnet and the magnetic conductive slider.

Further, a storage slot for the diffusion plate to pass through freely is arranged on an inner wall of one side of the internal cavity of the connecting housing.

Further, a mounting groove configured for interference-fitted mounting of the diffusion plate is formed on an outer wall of one side of the flip bracket.

Further, the flip bracket is provided with a tensioning mechanism configured to apply a tensioning force on the diffusion plate when the diffusion plate flips to a position parallel to a surface of the LED light strip.

Further, the tensioning mechanism includes two clamping arms, the two clamping arms are located at both ends of the diffusion plate in a length direction, an insertion slot configured for mating insertion of an end portion of either of the clamping arms is formed on a surface of the flip bracket, a clamping groove interference-fitted with the diffusion plate is formed on a side wall of either of the clamping arms, and the connecting housing is provided with a tightly-abutting assembly that applies a tightly-abutting force on the clamping arms when the flip bracket flips.

Further, the tightly-abutting assembly includes a short pin fixedly connected to one end of the clamping arm that penetrates into the insertion slot, the short pin extends from the flip bracket and slides freely, a tension spring is sleeved around a periphery of the short pin, two ends of the tension spring are fixedly connected to a surface of the clamping arm and an inner wall of the insertion slot, a rubber block is embedded on an outer wall of the connecting housing, an inclined surface is arranged at one end of the rubber block facing the lamp cover, and one end of the short pin that extends from the flip bracket is cooperatively used with the inclined surface.

Further, a roll ball is rotatably embedded at one end of the short pin that extends from the flip bracket, and the roll ball is in rolling contact with the inclined surface and an outer wall of the rubber block facing the flip bracket.

Compared with the prior art, the present invention has the beneficial effects as follows:
1. In the present invention, arrangement of the flipping mechanism enables to drive the diffusion plate to flip during daytime, and uniform diffusion of light emitted by the LED light strip through the diffusion plate is not required, thereby increasing light intensity of the LED light strip and improving visibility during daytime driving; and at night, the flipping mechanism drives the diffusion plate to flip to a position parallel to the LED light strip, and the diffusion plate uniformly diffuses the light emitted by the LED light strip, thereby preventing glare at night;
2. in the present invention, the electromagnet is magnetizable and generates a magnetic attraction force for the magnetic conductive slider, such that the flip bracket rotates toward the lamp cover, the diffusion plate is parallel to the LED light strip, when the electromagnet is de-energized, the elastic member releases its elastic potential energy and drives the flip bracket to rotate reversely, and the surface of the diffusion plate is perpendicular to the surface of the LED light strip, which results in a compact structure and facilitates control through an electronic control unit; and
3. in the present invention, during a process that the flip bracket flips to a position where the diffusion plate is parallel to the LED light strip, and the clamping arm tends to move in a direction away from the flip bracket, such that the clamping arm generates a tensioning force on the diffusion plate, which prevents vibrations of the diffusion plate during vehicle operation on a bumpy road, and ensures diffusion of the light from the LED light strip.

### BRIEF DESCRIPTION OF THE DRAWINGS

FIG. 1 is a schematic diagram of an overall structure of a through lamp assembly for a warning vehicle according to the present invention.
FIG. 2 is a schematic diagram of an exploded view of a structure in FIG. 1.
FIG. 3 is a schematic diagram of the structure in FIG. 1 without a lamp cover.
FIG. 4 is a schematic diagram of positional relationship of a partially sectioned structure in FIG. 3.
FIG. 5 is an enlarged schematic diagram of a partial structure of a part A in FIG. 4.
FIG. 6 is a schematic diagram of positional relationship after assembly of a diffusion plate, a flip bracket, and a clamping arm according to the present invention.
FIG. 7 is a schematic diagram of positional relationship of a partially sectioned structure in FIG. 6.
FIG. 8 is an enlarged schematic diagram of a partial structure of a part B in FIG. 7.
FIG. 9 is a schematic diagram of an exploded view of a structure in FIG. 6.
FIG. 10 is enlarged schematic diagram of a partial structure of a part C in FIG. 9.
FIG. 11 is a schematic structural diagram of a rubber block according to the present invention.

Reference numerals are described as follows: 1-lamp cover; 2-connecting housing; 3-LED light strip; 4-flip bracket; 5-diffusion plate; 6-sliding block; 7-mounting cavity; 8-magnetic conductive slider; 9-elastic member; 10-electromagnet; 11-waist-shaped hole; 12-gear portion; 13-clamping arm; 14-insertion slot; 15-roll ball; 16-short pin; 17-tension spring; 18-mounting groove; 19-rubber block; and 20-inclined surface.

### DETAILED DESCRIPTION OF EMBODIMENTS

The technical solutions in the examples of the present invention will be clearly and completely described below in combination with the accompanying drawings in the examples of the present invention. Apparently, the examples described are merely some rather than all of the examples of the present invention. Based on the examples of the present invention, all other examples obtained by those of ordinary skill in the art without making creative efforts shall fall within the protection scope of the present invention.

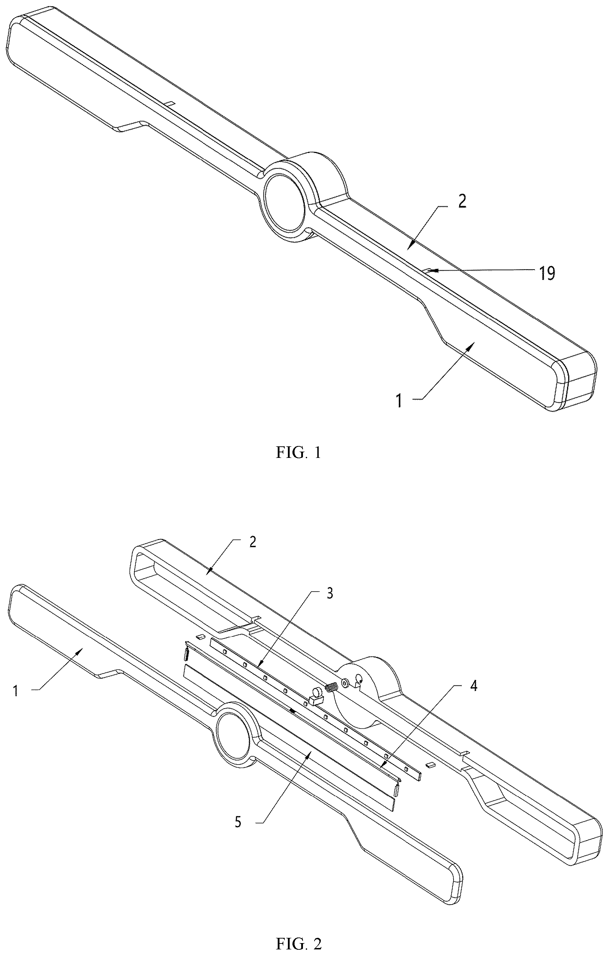

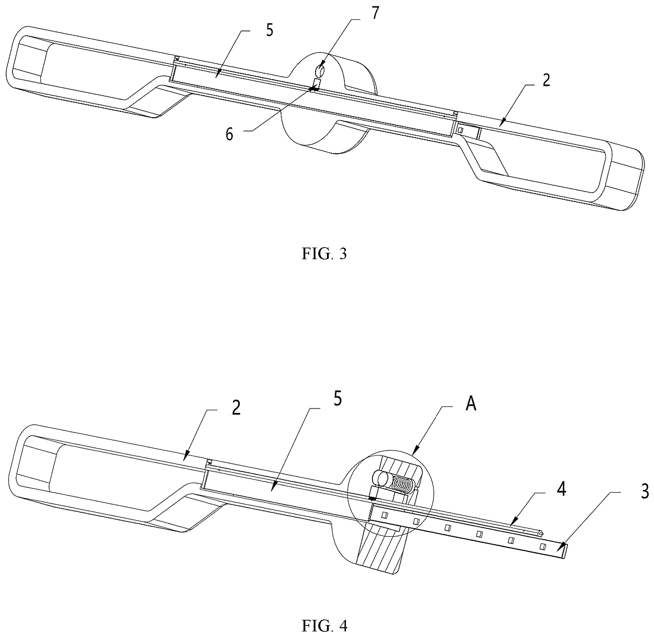

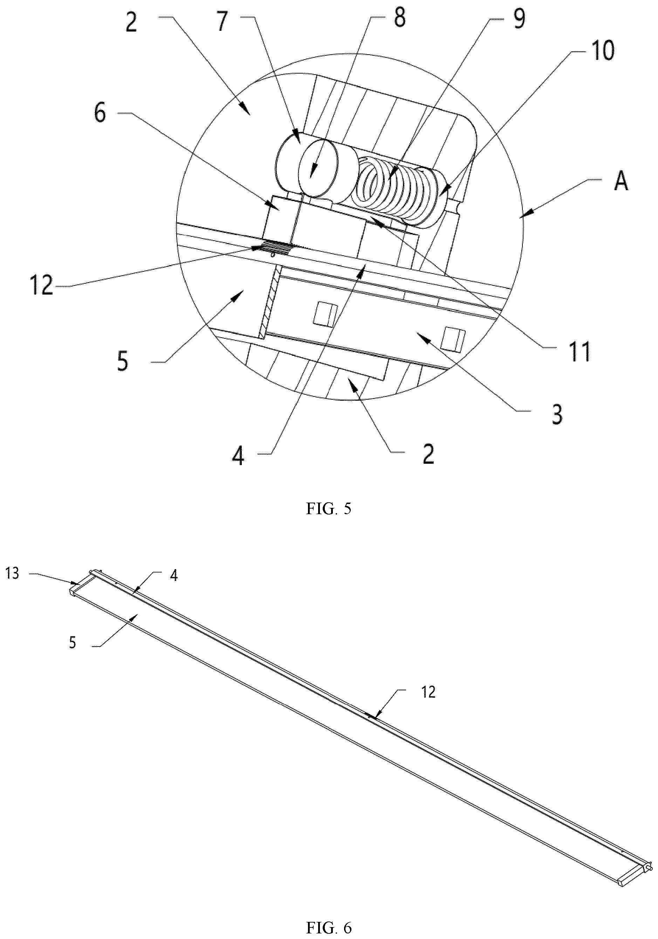

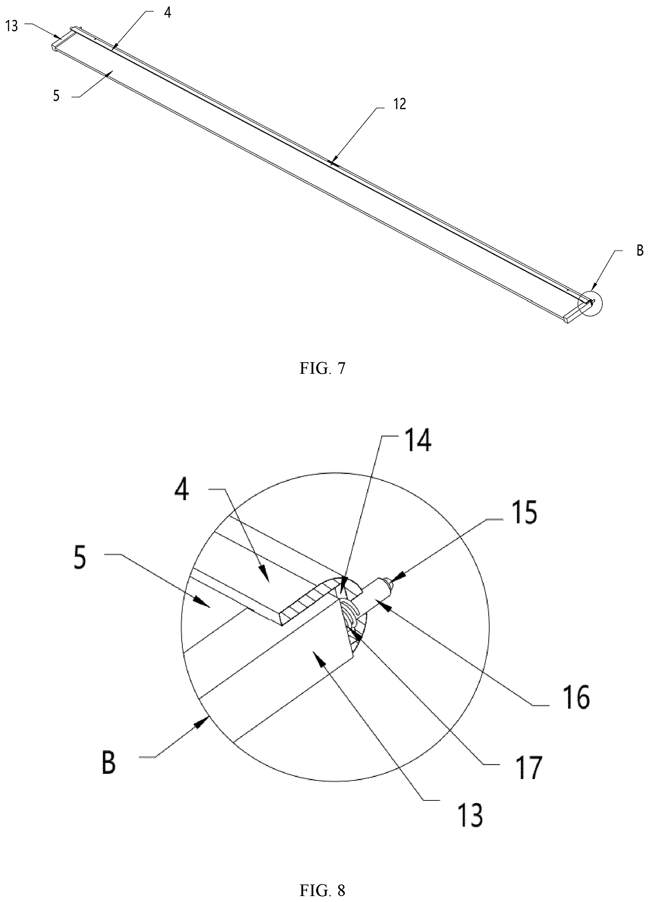

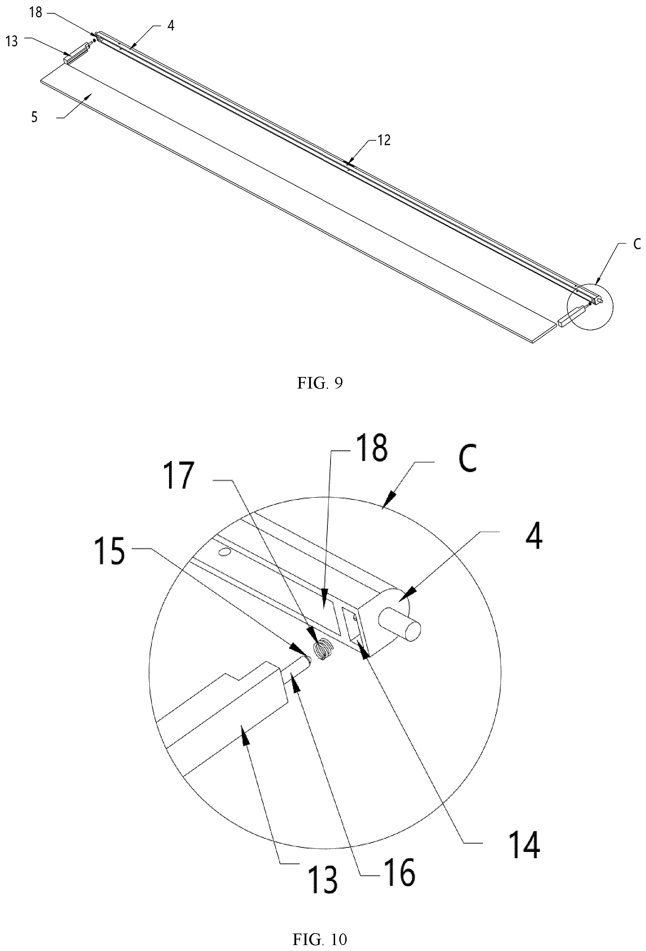

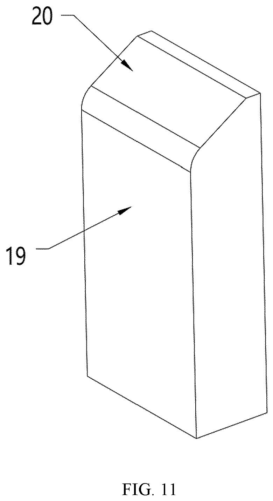

With reference to FIGs. 1-11, the present invention provides a technical solution: a through lamp assembly for a warning vehicle, includes a connecting housing 2 detachably connected to a body structure of a new energy warning vehicle and a lamp cover 1 cooperatively mounted with the connecting housing 2, an LED light strip 3 is mounted inside an internal cavity of the connecting housing 2 via screws, a side wall of the internal cavity of the connecting housing 2 is pivotally and rotatably connected to a flip bracket 4, a length direction of the flip bracket 4 is consistent with a length direction of the LED light strip 3, a mounting groove 18 is formed on an outer wall of one side of the flip bracket 4, and a diffusion plate 5 is mounted inside the mounting groove 18 in an interference-fitted manner, where the diffusion plate 5 is configured to uniformly diffuse light emitted by the LED light strip 3, a length direction of the diffusion plate 5 is consistent with the length direction of the LED light strip 3, when the flip bracket 4 flips to a position where the diffusion plate 5 is parallel to a surface of the LED light strip 3, and the diffusion plate 5 is located between the lamp cover 1 and the LED light strip 3, such that when the LED light strip 3 works, the diffusion plate 5 uniformly diffuses the light emitted by the LED light strip 3;
an accommodating groove is formed on a surface of the connecting housing 2, a sliding block 6 is slidably mounted inside the accommodating groove in a snap-fitted manner, a rack portion (not labeled in the drawings) is arranged on a side surface of the sliding block 6 facing the flip bracket 4, and a gear portion 12 is arranged on a surface of the flip bracket 4, where the gear portion 12 is coaxial with a rotating pivot of the flip bracket 4 on the connecting housing 2, the gear portion 12 and the rack portion are externally meshed with each other, and when the sliding block 6 slides inside the accommodating groove, the gear portion 12 and the rack portion are in meshed transmission, thereby driving the flip bracket 4 to rotate along the rotating pivot on the connecting housing 2;
a connecting pin is fixedly connected to a surface of the sliding block 6, an axial direction of the connecting pin is perpendicular to a sliding direction of the sliding block 6 in the accommodating groove, one end of the connecting pin away from the sliding block 6 is fixedly connected to a magnetic conductive slider 8 (made from any material such as iron, cobalt, or nickel), a waist-shaped hole 11 for the connecting pin to pass through freely is formed inside the connecting housing 2, a mounting cavity 7 for the magnetic conductive slider 8 to pass through freely is further arranged inside the connecting housing 2, an electromagnet 10 is mounted at a bottom of the mounting cavity 7, the electromagnet 10 and the magnetic conductive slider 8 are cooperatively used, and an elastic member 9 is arranged therebetween, where the elastic member 9 is configured to exert an elastic abutment-resisting force on the magnetic conductive slider 8 in a direction away from the electromagnet 10, specifically the elastic member 9 is a spring, two elastic ends of the spring abut against both the electromagnet 10 and the magnetic conductive slider 8, and the electromagnet 10 is magnetizable when energized and generates a magnetic attraction force for the magnetic conductive slider 8, such that the magnetic conductive slider 8 moves toward the electromagnet 10 and compresses the spring, and the spring stores elastic potential energy; when the electromagnet 10 is de-energized, the magnetic attraction force of the electromagnet 10 on the magnetic conductive slider 8 dissipates, and the elastic potential energy from the spring is released, such that the magnetic conductive slider 8 is driven to move away from the electromagnet 10, and when the magnetic conductive slider 8 moves, the connecting pin drives the sliding block 6 to slide inside the accommodating groove of the connecting housing 2;
additionally, such arrangement results in a compact structure, when the sliding block 6 slides in the accommodating groove, the flip bracket 4 is driven to flip through meshed engagement between the gear portion 12 and the rack portion, and the diffusion plate 5 rotates, where a storage slot for the diffusion plate 5 to pass through freely is arranged on an inner wall of one side of the internal cavity of the connecting housing 2 (near the flip bracket 4);
insertion slots 14 are formed on outer walls on both lengthwise sides of the flip bracket 4, two clamping arms 13 are mounted in the two insertion slots 14 in an inserted manner, the two clamping arms 13 are located at both ends of the diffusion plate 5 in the length direction, a clamping groove interference-fitted with the diffusion plate 5 is formed on a side wall of either of the clamping arms 13, one end of the clamping arm 13 that penetrates into the insertion slot 14 is fixedly connected to a short pin 16, the short pin 16 extends from the flip bracket 4 and slides freely, a tension spring 17 is sleeved around a periphery of the short pin 16, two ends of the tension spring 17 are fixedly connected to a surface of the clamping arm 13 and an inner wall of the insertion slot 14, a rubber block 19 is embedded on an outer wall of the connecting housing 2, an inclined surface 20 is arranged at one end of the rubber block 19 facing the lamp cover 1, a roll ball 15 is rotatably embedded at one end of the short pin 16 that extends from the flip bracket 4, and the roll ball 15 is in rolling contact with the inclined surface 20 and an outer wall of the rubber block 19 facing the flip bracket 4; and
during a process that the flip bracket 4 flips to a position where a surface of the diffusion plate 5 is parallel to a surface of the LED light strip 3, as shown in FIG. 8, the short pin 16 rotates from top to bottom, the roll ball 15 comes into contact with a surface of the inclined surface 20 on the rubber block 19, elastic deformability of the rubber block 19 causes, when the roll ball 15 rolls from the inclined surface 20 to a surface of the rubber block 19 facing the flip bracket 4, that the roll ball 15 is subjected to a certain compressive force, and the clamping arm 13 tends to slide towards an outer side of the flip bracket 4, such that the clamping arm 13 generates a tensioning force on the diffusion plate 5, which prevents vibrations of the diffusion plate 5 during vehicle operation on a bumpy road.

A working principle of the present invention:
When the new energy warning vehicle is driven at night, an electronic control unit controls a power supply to charge the electromagnet 10, a magnetic attraction force is applied on the magnetic conductive slider 8, the magnetic conductive slider 8 moves toward the electromagnet 10 and compresses the spring, the spring stores elastic potential energy, and the magnetic conductive slider 8 drives the sliding block 6 to slide inside the accommodating groove; when the sliding block 6 slides inside the accommodating groove, meshed engagement between the gear portion 12 and the rack portion drives the flip bracket 4 to flip, such that the diffusion plate 5 flips until the diffusion plate 5 is parallel to the surface of the LED light strip 3, and in this case, the diffusion plate 5 uniformly diffuses the light emitted by the LED light strip 3;
during the above process, when the flip bracket 4 flips, the short pin 16 rotates from top to bottom, the roll ball 15 comes into contact with a surface of the inclined surface 20 on the rubber block 19, elastic deformability of the rubber block 19 causes, when the roll ball 15 rolls from the inclined surface 20 to a surface of the rubber block 19 facing the flip bracket 4, that the roll ball 15 is subjected to a certain compressive force, and the clamping arm 13 tends to slide towards an outer side of the flip bracket 4, such that the clamping arm 13 generates a tensioning force on the diffusion plate 5, which prevents vibrations of the diffusion plate 5 during vehicle operation on a bumpy road;
during daytime driving, the electronic control unit disconnects the power supply to stop charging the electromagnet 10, the magnetic attraction force of the electromagnet 10 on the magnetic conductive slider 8 dissipates, and the elastic potential energy from the spring is released, such that the magnetic conductive slider 8 is driven to move away from the electromagnet 10, the diffusion plate 5 flips into the accommodating groove, and in this case, the light emitted by the LED light strip 3, without interference from the diffusion plate 5, maintains a high intensity of illumination, thereby improving visibility during daytime driving; and
Additionally, further, the through lamp described in this example may be mounted on a front fascia and side panels of a vehicle, the through lamp changes constantly with variations in driving speeds, light variations are used to alert pedestrians or vehicles approaching from behind about an approximate driving speed. Specifically, a sensor is mounted on the vehicle body to collect data of speed changes, the data collected by the sensor is transmitted to the electronic control unit, and the electronic control unit controls the LED light strip 3 in the through lamp to induce light variations. For example, when the driving speed is relatively fast, the LED light strip 3 illuminates from a middle to two sides thereof, which forms a "sequential lighting" effect, or a light flashing frequency is controlled to alert pedestrians or vehicles approaching from behind. Automatic settings are alternatively achieved based on maps or related geographical locations, for instance, when the vehicle approaches a threshold distance from vicinity of a school, the warning function is automatically activated, but for normal road conditions, light feedback effects corresponding to specific driving speeds can be set through an internal control module (such as the electronic control unit); and additionally, the warning function may be automatically activated according to factors such as weather conditions and natural light intensity. Moreover, mounting positions and the number of the through lamps may be flexibly and randomly adjusted.

It is to be explained that the relation terms, for example, first, second, etc., are used herein merely for distinguishing one entity or operation from another entity or operation but do not necessarily require or imply that there exists any actual relation or sequence between these entities or operations. Furthermore, terms "including", "comprising", or any other variants are intended to cover the non-exclusive including, thereby making that the process, method, object or apparatus comprising a series of elements comprise not only those elements but also other elements that are not listed explicitly or the inherent elements to the process, method, merchandise or apparatus. Although the examples of the present invention have been illustrated and described, it should be understood that those of ordinary skill in the art may make various changes, modifications, replacements and variations to the above examples without departing from the principle and spirit of the present invention, and the scope of the present invention is limited by the appended claims and their legal equivalents.

## Claims

1. A through lamp assembly for a warning vehicle, comprising:
a connecting housing (2) and a lamp cover (1) cooperatively mounted with the connecting housing (2);
an LED light strip (3) mounted inside an inner cavity of the connecting housing (2);
a flip bracket (4) rotatably connected to the internal cavity of the connecting housing (2), wherein the connecting housing (2) is provided with a flipping mechanism configured to drive the flip bracket (4) to flip toward an inner side of the connecting housing (2); and
a diffusion plate (5) mounted on the flip bracket (4), wherein when the diffusion plate (5) flips to a position parallel to a surface of the LED light strip (3), the diffusion plate (5) is located between the lamp cover (1) and the LED light strip (3).

2. The through lamp assembly for a warning vehicle according to claim 1, wherein the flipping mechanism comprises a sliding block (6) inserted into an accommodating groove formed on a surface of the connecting housing (2), the sliding block (6) freely slides in the accommodating groove, a rack portion is arranged on a surface of the sliding block (6), and a gear portion (12) is arranged on a surface of the flip bracket (4), wherein the gear portion (12) is coaxial with a rotating pivot of the flip bracket (4) on the connecting housing (2), the gear portion (12) and the rack portion are externally meshed with each other, and the connecting housing (2) is provided with a linear translation assembly configured to drive the sliding block (6) to linearly move inside the accommodating groove.

3. The through lamp assembly for a warning vehicle according to claim 2, wherein the linear translation assembly comprises a connecting pin fixedly connected to a surface of the sliding block (6), one end of the connecting pin away from the sliding block (6) is fixedly connected to a magnetic conductive slider (8), a waist-shaped hole (11) for the connecting pin to pass through freely is formed inside the connecting housing (2), a mounting cavity (7) for the magnetic conductive slider (8) to pass through freely is further arranged inside the connecting housing (2), an electromagnet (10) is mounted at a bottom of the mounting cavity (7), the electromagnet (10) and the magnetic conductive slider (8) are cooperatively used, and an elastic member (9) is arranged therebetween, wherein the elastic member (9) is configured to exert an elastic abutment-resisting force on the magnetic conductive slider (8) in a direction away from the electromagnet (10).

4. The through lamp assembly for a warning vehicle according to claim 3, wherein the elastic member (9) is a spring, and two elastic ends of the spring abut against both the electromagnet (10) and the magnetic conductive slider (8).

5. The through lamp assembly for a warning vehicle according to claim 1, wherein a storage slot for the diffusion plate (5) to pass through freely is arranged on an inner wall of one side of the internal cavity of the connecting housing (2).

6. The through lamp assembly for a warning vehicle according to claim 1, wherein a mounting groove (18) configured for interference-fitted mounting of the diffusion plate (5) is formed on an outer wall of one side of the flip bracket (4).

7. The through lamp assembly for a warning vehicle according to claim 1, wherein the flip bracket (4) is provided with a tensioning mechanism configured to apply a tensioning force on the diffusion plate (5) when the diffusion plate (5) flips to a position parallel to a surface of the LED light strip (3).

8. The through lamp assembly for a warning vehicle according to claim 7, wherein the tensioning mechanism comprises two clamping arms (13), the two clamping arms (13) are located at both ends of the diffusion plate (5) in a length direction, an insertion slot (14) configured for mating insertion of an end portion of either of the clamping arms (13) is formed on a surface of the flip bracket (4), a clamping groove interference-fitted with the diffusion plate (5) is formed on a side wall of either of the clamping arms (13), and the connecting housing (2) is provided with a tightly-abutting assembly that applies a tightly-abutting force on the clamping arms (13) when the flip bracket (4) flips.

9. The through lamp assembly for a warning vehicle according to claim 8, wherein the tightly-abutting assembly comprises a short pin (16) fixedly connected to one end of the clamping arm (13) that penetrates into the insertion slot (14), the short pin (16) extends from the flip bracket (4) and slides freely, a tension spring (17) is sleeved around a periphery of the short pin (16), two ends of the tension spring (17) are fixedly connected to a surface of the clamping arm (13)and an inner wall of the insertion slot (14), a rubber block (19) is embedded on an outer wall of the connecting housing (2), an inclined surface (20) is arranged at one end of the rubber block (19) facing the lamp cover (1), and one end of the short pin (16) that extends from the flip bracket (4) is cooperatively used with the inclined surface (20).

10. The through lamp assembly for a warning vehicle according to claim 9, wherein a roll ball (15) is rotatably embedded at one end of the short pin (16) that extends from the flip bracket (4), and the roll ball (15) is in rolling contact with the inclined surface (20) and an outer wall of the rubber block (19) facing the flip bracket (4).
